# EUROPÄISCHE PATENTSCHRIFT

(11) **EP 3 818 195 B1**
(45) Veröffentlichungstag und Bekanntmachung des Hinweises auf die Patenterteilung: **27.09.2023**
(21) Anmeldenummer: 19737674.2
(22) Anmeldetag: 28.06.2019
(51) Int. Cl.: H01M 8/0273, H01M 8/0276, H01M 8/1018, C25B 9/17, H01M 8/10

(54) **BAUGRUPPE FÜR EINE ELEKTROCHEMISCHE VORRICHTUNG UND VERFAHREN ZUM HERSTELLEN EINER SOLCHEN BAUGRUPPE**
ASSEMBLY FOR AN ELECTROCHEMICAL DEVICE AND METHOD FOR PRODUCING AN ASSEMBLY OF THIS TYPE
MODULE POUR DISPOSITIF ÉLECTROCHIMIQUE ET PROCÉDÉ DE FABRICATION D'UN TEL MODULE

(30) Priorität: 02.07.2018 DE 102018115994
(43) Veröffentlichungstag der Anmeldung: 12.05.2021
(73) Patentinhaber: EKPO Fuel Cell Technologies GmbH, 72581 Dettingen (DE)
(72) Erfinder: STAHL, Peter, 72555 Metzingen (DE); FINK, Oliver, 72555 Metzingen (DE); DAHL, Karsten, 73277 Owen (DE); KRAFT, Jürgen, 72555 Metzingen (DE)
(74) Vertreter: Hoeger, Stellrecht & Partner Patentanwälte mbB
(86) Internationale Anmeldenummer: PCT/EP2019/067363
(87) Internationale Veröffentlichungsnummer: WO 2020/007732

(56) Entgegenhaltungen:
- DE-A1-102012 013 832
- DE-A1-102012 020 975
- DE-T5-112007 000 385
- DE-T5-112009 000 381
- JP-A- 2008 287 910

## Beschreibung

Die vorliegende Erfindung betrifft eine Baugruppe für eine elektrochemische Vorrichtung, die mindestens eine Gasdiffusionslage und mindestens ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst.

Eine solche Baugruppe kann einen Bestandteil einer elektrochemisch aktiven Einheit für die elektrochemische Vorrichtung bilden, wobei die elektrochemisch aktive Einheit eine Membran und mindestens eine solche Baugruppe umfasst.

Eine solche elektrochemisch aktive Einheit kann zusammen mit jeweils einer Bipolarplatte eine elektrochemische Einheit der elektrochemischen Vorrichtung bilden, welche beispielsweise als eine Brennstoffzellenvorrichtung oder als ein Elektrolyseur ausgebildet ist.

Die elektrochemische Vorrichtung umfasst vorzugsweise mehrere in einer Stapelrichtung übereinander angeordnete elektrochemische Einheiten sowie vorzugsweise zwei Endplatten, zwischen denen der Stapel von elektrochemischen Einheiten angeordnet ist und welche mittels einer Spannvorrichtung gegeneinander verspannbar sind, um die dazwischen angeordneten elektrochemischen Einheiten und insbesondere deren Dichtelemente mit einer längs der Stapelrichtung gerichteten Spannkraft zu beaufschlagen.

In Brennstoffzellenvorrichtungen und in Elektrolyseuren werden in verschiedenen Ebenen einer elektrochemischen Einheit und, je nach Design, auch in verschiedenen Bereichen derselben Ebene unterschiedliche Medien geführt. Diese Medien können insbesondere ein anodisches Fluid (Brenngas), ein kathodisches Fluid (Oxidationsmittel) und gegebenenfalls auch ein fluides Kühlmittel sein.

Die der elektrochemischen Vorrichtung zuzuführenden Medien (kathodisches Fluid, anodisches Fluid, Kühlmittel) werden mittels einer Medienverteilungsstruktur (auch als "Manifold" bezeichnet) mit Medium-Zuführkanälen und Medium-Abführkanälen, welche sich in der Stapelrichtung der elektrochemischen Vorrichtung erstrecken, den verschiedenen Ebenen der elektrochemischen Vorrichtung zugeführt oder aus den verschiedenen Ebenen der elektrochemischen Vorrichtung abgeführt und müssen jeweils aus einem Medium-Zuführkanal dem Strömungsfeld (Flow Field) des betreffenden Mediums in einer elektrochemischen Einheit zugeführt und aus dem Strömungsfeld wieder in einen Medium-Abführkanal abgeführt werden. Dabei müssen sowohl die Medium-Zuführkanäle und Medium-Abführkanäle als auch die Strömungsfelder abgedichtet werden, um sowohl Leckagen in den Außenraum der elektrochemischen Vorrichtung als auch zwischen den Räumen, welche von den verschiedenen Medien durchströmt werden, zu verhindern.

Die durch die elektrochemische Vorrichtung geführten Medien dürfen sich weder miteinander vermischen noch aus den elektrochemischen Einheiten austreten, weshalb in mehreren Ebenen Dichtungen erforderlich sind.

Diese Dichtungen können beispielsweise auf der Basis von Elastomermaterialien realisiert werden.

In elektrochemischen Einheiten mit metallischen Bipolarplatten können die Dichtungen vollständig oder teilweise durch Sicken in der Bipolarplatte oder durch Dichtungen auf der Basis von Elastomermaterialien verwirklicht sein.

Die Bipolarplatten (auch Separatoren oder Interkonnektoren genannt) können einteilig ausgebildet sein oder mindestens zwei Einzellagen (Bipolarplattenlagen) umfassen.

Die Bipolarplattenlagen einer mehrlagigen Bipolarplatte können durch Fügeverfahren wie Schweißen oder Kleben miteinander verbunden werden.

Eine Dichtung kann als separate Komponente in den Stapel aus elektrochemischen Einheiten eingelegt oder an einer Bipolarplatte oder an einem anderen Bestandteil einer elektrochemischen Einheit, beispielsweise an einer Gasdiffusionslage, festgelegt sein.

Wenn ein Dichtelement direkt an eine Gasdiffusionslage angebunden wird, wird ein fließender Übergang zwischen der Dichtung und der Gasdiffusionslage geschaffen.

Eine zwischen zwei Baugruppen aus jeweils einer Gasdiffusionslage und einem Dichtelement verpresste Membran erfährt keine übermäßigen Spannungsspitzen.

Ein Zellaufbau mit Baugruppen aus jeweils einer Gasdiffusionslage und einem Dichtelement kann im Vergleich zu einer Dichtungslösung mit einer Randverstärkungsanordnung sehr kompakt aufgebaut werden, da kein zusätzlicher Platz für die Überlappung zwischen der Randverstärkungsanordnung und der Membran-Elektroden-Anordnung vorgesehen werden muss.

Die Anbindung des Dichtelements an die Gasdiffusionslage kann beispielsweise in einem Spritzgießprozess erfolgen. Dabei wird eine Gasdiffusionslage in ein (vorzugsweise mehrteiliges) Spritzgießwerkzeug eingelegt und an ihrem äußeren Umfang mit einem Dichtungsmaterial oder Spritzgießmaterial umspritzt.

Hierbei entsteht ein Durchdringungsbereich am Übergang zwischen der Gasdiffusionslage und dem Dichtelement, in welchem das Spritzgießmaterial einen Teil der porösen Gasdiffusionslage durchdringt.

Dieser Durchdringungsbereich schafft eine stoffschlüssige und/oder formschlüssige Verbindung zwischen der Gasdiffusionslage und dem Dichtelement, so dass die Gasdiffusionslage und das Dichtelement während der nachfolgenden Montageschritte und während des Betriebs der elektrochemischen Vorrichtung mechanisch ausreichend gut miteinander verbunden sind.

Im Durchdringungsbereich sind die Poren der Gasdiffusionslage mit dem Spritzgießmaterial, welches nach dem Aushärten das Dichtungsmaterial bildet, verfüllt, so dass in diesem Bereich der Transport eines kathodischen Fluids oder eines anodischen Fluids zum elektrochemisch aktiven Bereich der elektrochemischen Einheit erschwert wird. Der Durchdringungsbereich soll daher einen möglichst geringen Teil der Gasdiffusionslage umfassen, dabei jedoch ausreichend groß sein, um eine stabile mechanische Anbindung zwischen der Gasdiffusionslage und dem Dichtelement zu gewährleisten.

Um den Durchdringungsbereich auf der Gasdiffusionslagenseite zu begrenzen, wird die Gasdiffusionslage, die in ihrer Dickenrichtung (parallel zur Stapelrichtung der elektrochemischen Vorrichtung) mechanisch kompressibel ist, im Spritzgießwerkzeug lokal mittels einer Abdrückkante verpresst. Hierdurch steigt der Kapillardruck in den Poren der Gasdiffusionslage lokal an, und die Durchdringung der Gasdiffusionslage mit dem Spritzgießmaterial wird in den zur Dickenrichtung (z-Richtung) senkrechten x- und y-Richtungen begrenzt.

Die Abdrückkante muss die Gasdiffusionslage mit einem Mindestdruck verpressen, um die Durchdringung der Gasdiffusionslage mit dem Spritzgießmaterial zu begrenzen. Allerdings darf die lokale Verpressung der Gasdiffusionslage durch die Abdrückkante auch nicht zu hoch sein, da die Gasdiffusionslage bei übermäßiger Verpressung beschädigt werden kann, beispielsweise durch Faserbruch.

Das Maß der Durchdringung der Gasdiffusionslage mit dem Spritzgießmaterial ist abhängig vom lokal, im jeweiligen Bereich der Gasdiffusionslage, anliegenden Druck der Spritzgießmasse im Spritzgießwerkzeug. Außerdem hängt der Grad der Durchdringung der Gasdiffusionslage mit dem Spritzgießmaterial von der Viskosität des Spritzgießmaterials, von der Temperatur des Spritzgießwerkzeugs (welche unter anderem die Viskosität des Spritzgießmaterials beeinflusst) und von den Eigenschaften der Gasdiffusionslage im Bereich der Abdrückkante und im restlichen Bereich der Gasdiffusionslage ab, insbesondere von der Porosität, von der Tortuosität (das heißt vom Grad der Gewundenheit der Transportwege innerhalb der Gasdiffusionslage), vom Kapillardruck und von der Hydrophobierung.

Bei der Anbindung eines Dichtelements an eine Gasdiffusionslage in einem Spritzgießprozess oder einem ähnlichen Verfahren wird Spritzgießmaterial an einem Einspritzpunkt oder an mehreren Einspritzpunkten in die Kavität des Spritzgießwerkzeugs eingeleitet und breitet sich dann entlang von Fließwegen unter Ausbildung einer Fließfront in der Kavität aus.

Die Erzeugung des Dichtelements an der jeweiligen Gasdiffusionslage erfolgt vorzugsweise in einem Spritzgießwerkzeug bei einer Temperatur, welche üblicherweise höher als 100°C und niedriger als 200°C ist.

Nach dem Spritzgießvorgang und einer Heizzeit zur Vernetzung des eingespritzten Dichtungsmaterials, insbesondere eines Elastomermaterials, wird das Spritzgießwerkzeug geöffnet und die Baugruppe aus der Gasdiffusionslage und dem am äußeren Rand der Gasdiffusionslage angespritzten Dichtelement aus dem Spritzgießwerkzeug entnommen.

Die Gasdiffusionslage und das Dichtungsmaterial des Dichtelements haben üblicherweise voneinander verschiedene Wärmeausdehnungskoeffizienten. In der Regel weist die Gasdiffusionslage einen sehr geringen (oder sogar negativen) Wärmeausdehnungskoeffizienten auf, während das Dichtelement einen sehr großen (positiven) Wärmeausdehnungskoeffizienten aufweist. Durch diese Unterschiede in den Wärmeausdehnungskoeffizienten kann es zu einem starken Verzug der Baugruppe und zu mechanischen Spannungen in der Baugruppe kommen.

Ferner weisen Elastomermaterialien üblicherweise eine Schrumpfung durch die Vernetzung auf, welche ebenfalls zum Verzug der Baugruppe beiträgt.

Der gesamte Verzug, der durch die Schrumpfung des Dichtelements aufgrund der Vernetzung und durch die Unterschiede in den Wärmeausdehnungskoeffizienten des Dichtelements einerseits und der Gasdiffusionslage andererseits insgesamt entsteht, wirkt sich auf die Form sowohl der Gasdiffusionslage als auch des Dichtelements aus.

Sowohl die Gasdiffusionslage als auch das Dichtelement weisen jeweils eine spezifische Steifigkeit und/oder ein Verformungsverhalten auf, welche das Entstehen des Verzuges stark beeinflussen.

Einen großen Einfluss auf das Verzugsverhalten hat die geometrische Gestaltung des Dichtelements, wobei der Verzug des inneren Dichtbereichs, der sich unmittelbar in der Nähe des Anbindungsbereiches zwischen dem Dichtelement und der jeweiligen Gasdiffusionslage befindet, einen größeren Einfluss auf den Verzug der Gasdiffusionslage hat als der äußere Dichtbereich, der sich weit entfernt von dem Anbindungsbereich zwischen dem Dichtelement und der Gasdiffusionslage befindet, da im Falle des inneren Dichtbereichs eine direkte Kraftübertragung zwischen dem Dichtelement und der Gasdiffusionslage stattfinden kann.

Der Querschnitt des Dichtelements im inneren Dichtbereich hat einen großen Einfluss auf den Verzug der Baugruppe, insbesondere auf den Verzug der jeweiligen Gasdiffusionslage, da durch einen größeren Querschnitt des Dichtelements bei gleicher Dehnung des Dichtungsmaterials eine größere Kraft in einer Richtung senkrecht zum Querschnitt des Dichtelements aufgebracht werden kann.

Ferner hat auch die Steifigkeit der Gasdiffusionslage einen sehr großen Einfluss auf den Verzug der Baugruppe. Eine hohe Steifigkeit der Gasdiffusionslage führt zu einem reduzierten Verzug der Gasdiffusionslage.

Der Verzug in der Baugruppe aus Gasdiffusionslage und Dichtelement und die hierdurch auftretenden mechanischen Spannungen in der Baugruppe können bei der Assemblierung der Baugruppen während der Montage der elektrochemischen Vorrichtung zu stark erhöhtem Aufwand führen, weil sowohl die Handhabung der Bauteile als auch die Positionierung der verschiedenen Lagen der elektrochemischen Vorrichtung (Baugruppen aus jeweils einer Gasdiffusionslage und einem Dichtelement, Bipolarplatten und Membranen) zueinander erschwert sind. Auch die bei der Montage der elektrochemischen Vorrichtung erreichbaren Positionierungstoleranzen können durch diese Verzüge signifikant ansteigen.

Um den Verzug der Baugruppe aus Gasdiffusionslage und Dichtelement zu reduzieren, könnte die Temperatur des Spritzgießwerkzeugs abgesenkt werden, so dass die Differenz zwischen der Werkzeugtemperatur (und damit der Temperatur des Dichtungsmaterials bei der Vernetzung im Spritzgießwerkzeug) und der Raumtemperatur geringer wird. Dadurch erhöht sich jedoch die Prozesszeit oder Zykluszeit des Spritzgießvorgangs, weil die Vernetzung bei der niedrigeren Temperatur langsamer erfolgt.

Wenn das verwendete Elastomermaterial auf eine geringere Vernetzungstemperatur angepasst wird, so wird dessen Lagerfähigkeit über längere Zeit (die sogenannte Topfzeit) negativ beeinflusst.

Auch eine geometrische Vorhaltung (Bombierung) des Verzuges des Dichtelements in der Dickenrichtung der Gasdiffusionslage, welche in der fertig montierten elektrochemischen Vorrichtung der Stapelrichtung der elektrochemisch aktiven Einheiten entspricht, innerhalb des inneren Dichtbereichs ist unvorteilhaft, da dies zu erhöhtem Aufwand im Spritzgießwerkzeug führen kann, weil hierbei die Trennflächen des Spritzgießwerkzeugs von (einfacher herzustellenden) ebenen Flächen abweichen können und somit die Trennung verschiedener Werkzeugteile des Spritzgießwerkzeugs nicht mehr in einer Ebene erfolgen kann, was zu erhöhten Werkzeugkosten führt.

Ferner kann eine solche geometrische Vorhaltung des Verzuges des Dichtelements zu erhöhtem Platzbedarf führen.

Die JP 2008 287910 A offenbart eine Baugruppe für eine elektrochemische Vorrichtung, welche eine Gasdiffusionslage und ein Dichtelement umfasst, wobei das Dichtelement einen inneren Dichtbereich und einen äußeren Dichtbereich umfasst und wobei das Dichtelement Dichtlippen und einen zwischen den Dichtlippen liegenden Zwischenbereich umfasst.

Der vorliegenden Erfindung liegt die Aufgabe zugrunde, eine Baugruppe für eine elektrochemische Vorrichtung der eingangs genannten Art zu schaffen, welche einen geringen Verzug aufweist, ohne dass hierfür die Temperatur im Spritzgießwerkzeug abgesenkt werden muss und/oder eine geometrische Vorhaltung des Verzuges des Dichtelements im inneren Dichtbereich vorgesehen sein muss.

Diese Aufgabe wird durch eine Baugruppe nach Anspruch 1 gelöst.

Unter der Höhe eines Elements ist dabei dessen Ausdehnung in der Dickenrichtung der Gasdiffusionslage zu verstehen, welche der Stapelrichtung der fertig montierten elektrochemischen Vorrichtung entspricht.

Durch einen oder mehrere solcher Entlastungsbereiche wird der Querschnitt des unmittelbar an die Gasdiffusionslage angebundenen Bereichs des Dichtelements reduziert, so dass die durch das Schrumpfen des Dichtelements aufgrund der unterschiedlichen Wärmeausdehnungskoeffizienten und aufgrund der Vernetzung des Elastomermaterials auf die Gasdiffusionslage aufgebrachte Kraft, die zum Verzug der Baugruppe, insbesondere der Gasdiffusionslage, führen kann, reduziert wird.

Durch den oder durch die Entlastungsbereiche wird das Dichtelement zwischen dem inneren Dichtbereich und dem äußeren Dichtbereich aufgeteilt, wobei der innere Dichtbereich direkt an die Gasdiffusionslage angebunden ist und der äußere Dichtbereich durch die Entlastungsbereiche von dem direkt an die Gasdiffusionslage angebundenen inneren Dichtbereich getrennt wird.

Bei der Erfindung ist vorgesehen, dass der innere Dichtbereich eine Strömungsfeld-Dichtlinie aufweist, welche sich um die Gasdiffusionslage herum erstreckt.

Ergänzend hierzu ist vorgesehen, dass der äußere Dichtbereich mindestens eine Mediumkanal-Dichtlinie aufweist, welche sich um eine Medium-Durchtrittsöffnung des Dichtelements herum erstreckt.

Der mindestens eine Entlastungsbereich ist zwischen der Strömungsfeld-Dichtlinie und einer Mediumkanal-Dichtlinie des Dichtelements angeordnet.

Eine Entlastungsöffnung eines Entlastungsbereichs erstreckt sich vorzugsweise längs einer Dickenrichtung der Gasdiffusionslage durch das Dichtelement hindurch.

Ein Entlastungsbereich kann (insbesondere vollständig) durch eine Entlastungsöffnung gebildet sein.

Das Dichtelement umfasst vorzugsweise eine Mehrzahl von Entlastungsbereichen, welche längs einer Umfangsrichtung in der Gasdiffusionslage aufeinander folgen.

Bei einer besonderen Ausgestaltung der Erfindung ist vorgesehen, dass das Dichtelement mindestens einen Entlastungsbereich umfasst, welcher sich längs einer Umfangsrichtung der Gasdiffusionslage erstreckt und in einem Eckbereich der Baugruppe angeordnet ist, in welchem die Umfangsrichtung der Gasdiffusionslage ihre Richtung um einen Winkel (α) von mehr als 60°, insbesondere um einen Winkel (α) von im Wesentlichen 90°, ändert.

Bei einer besonderen Ausgestaltung der Erfindung ist vorgesehen, dass das Dichtelement mindestens einen Entlastungsbereich umfasst, welcher sich längs einer Umfangsrichtung der Gasdiffusionslage über eine Länge von weniger als 50 mm, insbesondere von weniger als 20 mm, erstreckt.

Um die Entstehung von Rissen im Dichtungsmaterial, insbesondere bei der Entformung des Dichtelements aus dem Spritzgießwerkzeug und bei der Handhabung der Bauteilgruppe, zu vermeiden, ist es günstig, wenn das Dichtelement mindestens einen Entlastungsbereich umfasst, welcher mindestens einen gerundeten Endbereich, vorzugsweise mindestens zwei gerundete Endbereiche, aufweist.

Der mindestens eine gerundete Endbereich weist vorzugsweise einen Rand mit einem bogenförmig gekrümmten Verlauf auf.

Zur Vermeidung von Rissen im Material des Dichtelements ist es besonders günstig, wenn das Dichtelement mindestens einen Entlastungsbereich umfasst, welcher einen sich längs einer Umfangsrichtung der Gasdiffusionslage erstreckenden Basisbereich mit einer Breite (b) und mindestens einen Endbereich mit einer gekrümmten Randlinie, deren Krümmungsradius (R) größer ist als die halbe Breite (b) des Basisbereichs, umfasst.

Insbesondere kann vorgesehen sein, dass das Dichtelement mindestens einen Entlastungsbereich umfasst, welcher zwei solche Endbereiche mit einer gekrümmten Randlinie, deren Krümmungsradius (R) größer ist als die halbe Breite (b) des Basisbereichs, umfasst.

Unter der Breite (b) des Basisbereichs ist dabei dessen Ausdehnung senkrecht zur Dickenrichtung der Gasdiffusionslage und senkrecht zur Umfangsrichtung der Gasdiffusionslage zu verstehen.

Der Entlastungsbereich kann insbesondere in der Draufsicht auf das Dichtelement - längs der Dickenrichtung der Gasdiffusionslage gesehen - im Wesentlichen hantelförmig ausgebildet sein.

Der äußere Dichtbereich des Dichtelements kann vorzugsweise unter Berücksichtigung eines Verzugsausgleichs gebildet sein.

Insbesondere kann ein Verzugsausgleich längs der Dickenrichtung der Gasdiffusionslage vorgesehen sein.

Alternativ oder ergänzend hierzu kann ein lateraler Verzugsausgleich in einer senkrecht zur Dickenrichtung der Gasdiffusionslage ausgerichteten Ebene vorgesehen sein.

Ein solcher Verzugsausgleich wird auch als eine Bombierung oder als eine geometrische Vorhaltung bezeichnet und erfolgt durch eine entsprechende Gestaltung des Spritzgießwerkzeugs, wobei die Konturen des Dichtelements im Spritzgießwerkzeug so ausgebildet werden, dass die Länge und Position der jeweiligen Kontur im Spritzgießwerkzeug abzüglich des zu erwartenden Schwundes durch die Vernetzung und des zu erwartenden Schwundes durch den Wärmeverzug der Länge und Position der Soll-Kontur des Dichtelements in der vollständig vernetzten und abgekühlten Baugruppe entspricht.

Wenn der Entlastungsbereich nicht durch eine Entlastungsöffnung, welche sich - vorzugsweise in der Dickenrichtung - durch das Dichtelement hindurch erstreckt, gebildet ist, sondern durch eine reduzierte Höhe des Entlastungsbereichs, so ist es besonders günstig, wenn die kleinste Höhe (hₑ) des Entlastungsbereichs weniger als ein Sechstel, insbesondere weniger als ein Achtel, der größten Höhe (H_{I}) des inneren Dichtbereichs und/oder weniger als ein Sechstel, insbesondere weniger als ein Achtel, der größten Höhe (H_{A}) des äußeren Dichtbereichs des Dichtelements beträgt.

Der Entlastungsbereich kann insbesondere als ein Film ausgebildet sein, insbesondere als ein dünner Film.

Die Materialstärke des Entlastungsbereichs beträgt vorzugsweise weniger als 100 µm, insbesondere weniger als 50 µm.

Bei einer besonderen Ausgestaltung der Erfindung ist vorgesehen, dass die Baugruppe eine erste Gasdiffusionslage und eine zweite Gasdiffusionslage, ein an der ersten Gasdiffusionslage erzeugtes erstes Dichtelement und ein an der zweiten Gasdiffusionslage erzeugtes zweites Dichtelement umfasst,
wobei jedes der Dichtelemente einen an der jeweils zugeordneten Gasdiffusionslage festgelegten inneren Dichtbereich und einen über den inneren Dichtbereich mit der jeweils zugeordneten Gasdiffusionslage verbundenen äußeren Dichtbereich umfasst und
wobei jedes der Dichtelemente mindestens einen Entlastungsbereich umfasst, welcher zwischen dem jeweiligen inneren Dichtbereich und dem jeweiligen äußeren Dichtbereich angeordnet ist und

a) eine sich durch das jeweilige Dichtelement hindurch erstreckende Entlastungsöffnung umfasst
   und/oder
b) eine kleinste Höhe (hₑ) aufweist, welche geringer ist als ein Viertel der größten Höhe (H_{I}) des jeweiligen inneren Dichtbereichs und geringer ist als ein Viertel der größten Höhe (H_{A}) des jeweiligen äußeren Dichtbereichs.

In diesem Fall sind vorzugsweise mindestens ein Entlastungsbereich des ersten Dichtelements und mindestens ein Entlastungsbereich des zweiten Dichtelements so relativ zueinander versetzt angeordnet, dass sie einander - längs einer Dickenrichtung der Gasdiffusionslagen gesehen - nicht überlappen. Hierdurch wird erreicht, dass keine durchgängige Öffnung zwischen den in der Stapelrichtung der elektrochemischen Vorrichtung über beziehungsweise unter der Baugruppe liegenden Räumen entsteht. Dadurch werden Kurzschlüsse im Fluss der fluiden Medien durch die elektrochemische Vorrichtung und/oder ungewollte Einlagerungen von fluiden Medien vermieden.

Die vorliegende Erfindung betrifft ferner ein Verfahren zum Herstellen einer Baugruppe für eine elektrochemische Vorrichtung, welche mindestens eine Gasdiffusionslage und mindestens ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst.

Der vorliegenden Erfindung liegt die weitere Aufgabe zugrunde, ein Verfahren der vorstehend genannten Art zu schaffen, durch welches eine Baugruppe hergestellt wird, welche einen geringen Verzug aufweist, ohne dass hierfür die Temperatur eines Spritzgießwerkzeugs abgesenkt werden muss und/oder ein Verzugsausgleich im inneren Dichtbereich des Dichtelements vorgenommen werden muss.

Diese Aufgabe wird erfindungsgemäß durch ein Verfahren nach Anspruch 13 gelöst.

Besondere Ausgestaltungen des erfindungsgemäßen Verfahrens sind bereits vorstehend im Zusammenhang mit den besonderen Ausgestaltungen der erfindungsgemäßen Baugruppe erläutert worden.

Das erfindungsgemäße Verfahren eignet sich insbesondere zum Herstellen der erfindungsgemäßen Baugruppe für eine elektrochemische Vorrichtung.

Jeder Entlastungsbereich kann lokal durch Stege, insbesondere aus Dichtungsmaterial, unterbrochen sein. Hierdurch wird die mechanische Anbindung zwischen dem inneren Dichtbereich und dem äußeren Dichtbereich auf den beiden einander gegenüberliegenden Seiten des Entlastungsbereichs beeinflusst.

Der Entlastungsbereich, insbesondere die Entlastungsöffnung, weist vorzugsweise eine Breite von weniger als 2 mm, insbesondere von höchstens 1 mm, auf.

Der Erfindung liegt das Konzept zugrunde, bei einem an eine Gasdiffusionslage angebundenen Dichtelement lokal mindestens einen, vorzugsweise mehrere Entlastungsbereiche vorzusehen, um den Querschnitt des Dichtungsmaterials, das direkt an die Gasdiffusionslage angebunden ist, zu reduzieren.

Der Bereich des Dichtelements, welcher durch den Entlastungsbereich von der Gasdiffusionslage abgekoppelt ist, kann geometrisch so ausgebildet oder vorgehalten werden, dass der Verzug der Baugruppe, insbesondere der Gasdiffusionslage, durch unterschiedliche Wärmedehnung des Materials der Gasdiffusionslage einerseits und des Materials des Dichtelements andererseits und durch den Schrumpf aufgrund der Vernetzung des elastomeren Dichtungsmaterials reduziert wird.

Die erfindungsgemäße Baugruppe eignet sich insbesondere zur Verwendung in einer elektrochemischen Vorrichtung, welche beispielsweise als eine Brennstoffzellenvorrichtung oder als ein Elektrolyseur ausgebildet ist.

Wenn die elektrochemische Vorrichtung als eine Brennstoffzellenvorrichtung ausgebildet ist, so ist sie vorzugsweise eine Polymer-Elektrolyt-Membran-Brennstoffzellenvorrichtung.

Weitere Merkmale und Vorteile der Erfindung sind Gegenstand der nachfolgenden Beschreibung und der zeichnerischen Darstellung von Ausführungsbeispielen.

In den Zeichnungen zeigen:

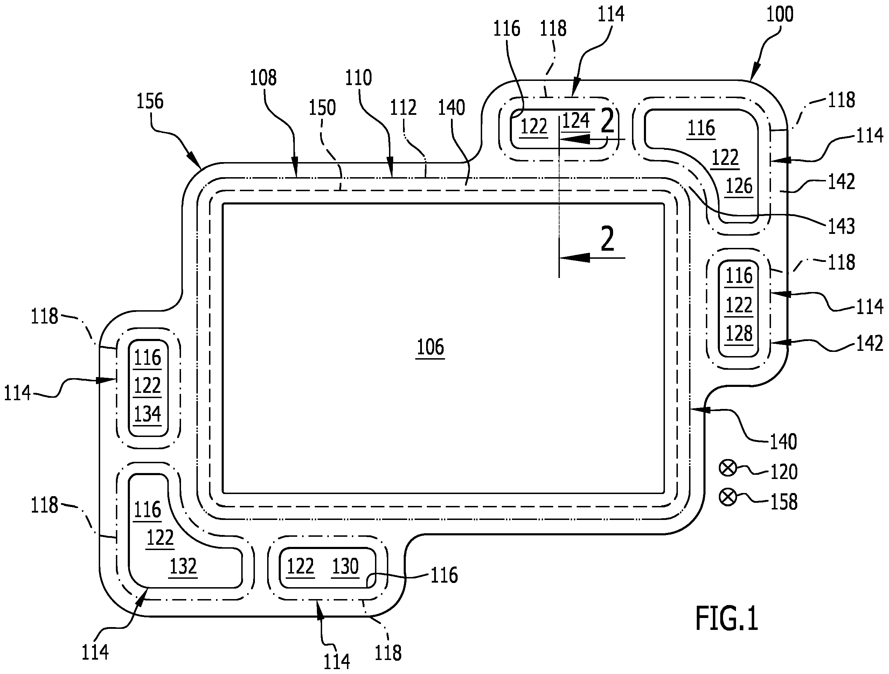

- Fig. 1: eine schematische Draufsicht auf eine elektrochemisch aktive Einheit für eine elektrochemische Vorrichtung, welche eine Membran, zwei Gasdiffusionslagen und ein an die Gasdiffusionslagen angebundenes Dichtungssystem umfasst;

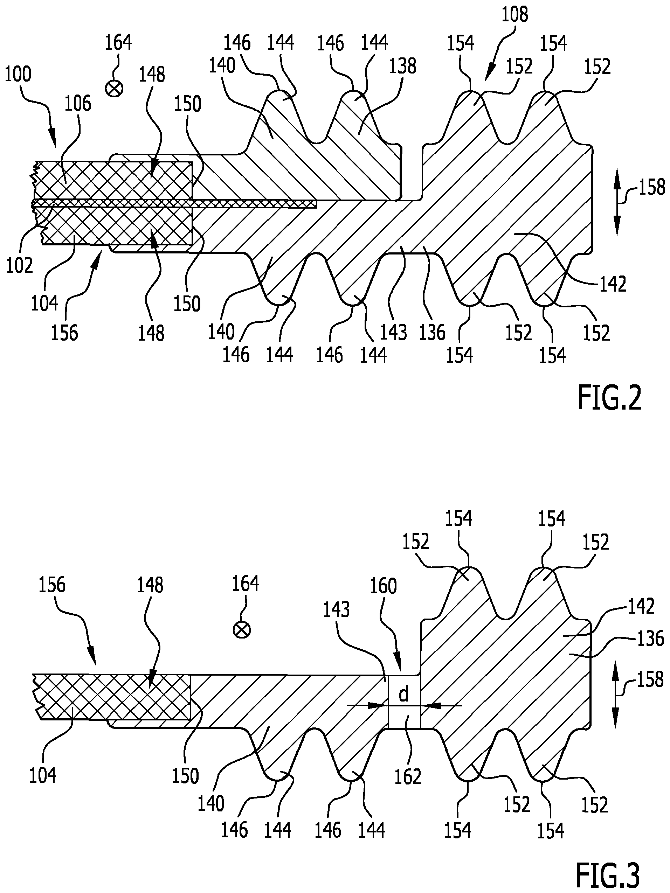

- Fig. 2: einen ausschnittsweisen Querschnitt durch die elektrochemisch aktive Einheit aus Fig. 1, längs der Linie 2 - 2 in Fig. 1;
- Fig. 3: einen der Fig. 2 entsprechenden ausschnittsweisen Querschnitt durch eine Baugruppe, welche eine Gasdiffusionslage und ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst und wobei das Dichtelement einen Entlastungsbereich umfasst, welcher zwischen dem inneren Dichtbereich und dem äußeren Dichtbereich angeordnet ist und eine sich durch das Dichtelement hindurch erstreckende Entlastungsöffnung umfasst;

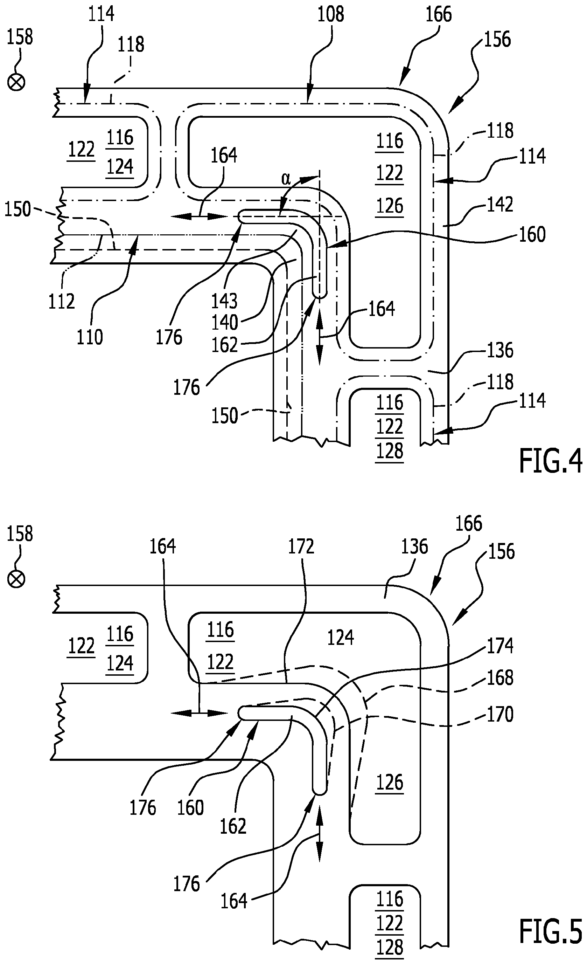

- Fig. 4: eine schematische ausschnittsweise Draufsicht auf einen Eckbereich einer Baugruppe, die eine Gasdiffusionslage und ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst und wobei das Dichtelement einen Entlastungsbereich umfasst, welcher zwischen dem inneren Dichtbereich und dem äußeren Dichtbereich angeordnet ist, sich längs einer Umfangsrichtung der Gasdiffusionslage erstreckt und in einem Eckbereich der Baugruppe angeordnet ist, in welchem die Umfangsrichtung der Gasdiffusionslage ihre Richtung um einen Winkel von 90° ändert;
- Fig. 5: eine schematische ausschnittsweise Draufsicht auf einen Eckbereich einer Baugruppe, welche eine Gasdiffusionslage und ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst, wobei das Dichtelement einen Entlastungsbereich umfasst, welcher zwischen dem inneren Dichtbereich und dem äußeren Dichtbereich angeordnet ist und wobei der äußere Dichtbereich unter Berücksichtigung eines Verzugsausgleichs gebildet ist;

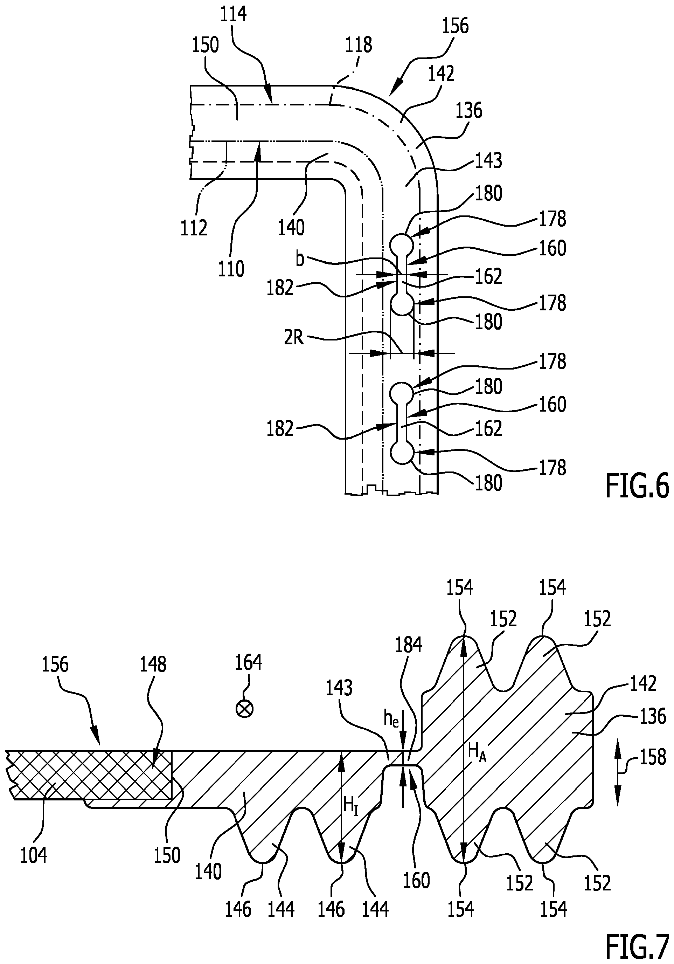

- Fig. 6: eine schematische ausschnittsweise Draufsicht auf eine Baugruppe, welche eine Gasdiffusionslage und ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst, wobei das Dichtelement zwei Entlastungsbereiche umfasst, welche zwischen dem inneren Dichtbereich und dem äußeren Dichtbereich angeordnet sind und wobei die Entlastungsbereiche - in der Draufsicht längs der Dickenrichtung der Gasdiffusionslage gesehen - hantelförmig ausgebildet sind;
- Fig. 7: einen ausschnittsweisen Querschnitt durch eine Baugruppe, welche eine Gasdiffusionslage und ein an der Gasdiffusionslage erzeugtes Dichtelement umfasst, wobei das Dichtelement einen an der Gasdiffusionslage festgelegten inneren Dichtbereich und einen über den inneren Dichtbereich mit der Gasdiffusionslage verbundenen äußeren Dichtbereich umfasst, wobei das Dichtelement einen Entlastungsbereich umfasst, welcher zwischen dem inneren Dichtbereich und dem äußeren Dichtbereich angeordnet ist und als ein Film mit einer Materialstärke von vorzugsweise weniger als 100 µm ausgebildet ist; und

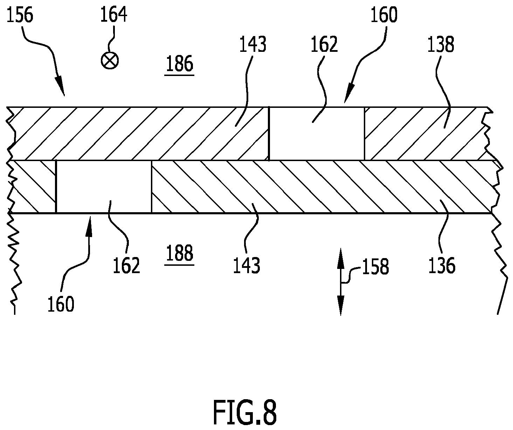

- Fig. 8: einen schematischen Querschnitt durch eine Baugruppe, welche zwei Gasdiffusionslagen und zwei an jeweils einer der Gasdiffusionslagen erzeugte Dichtelemente umfasst, wobei jedes der Dichtelemente einen an der jeweils zugeordneten Gasdiffusionslage festgelegten inneren Dichtbereich und einen über den inneren Dichtbereich mit der jeweils zugeordneten Gasdiffusionslage verbundenen äußeren Dichtbereich umfasst und wobei jedes der Dichtelemente mindestens einen Entlastungsbereich umfasst, welcher zwischen dem jeweiligen inneren Dichtbereich und dem jeweiligen äußeren Dichtbereich angeordnet ist und eine sich durch das jeweilige Dichtelement hindurch erstreckende Entlastungsöffnung umfasst, wobei ein Entlastungsbereich des einen Dichtelements und ein Entlastungsbereich des anderen Dichtelements so relativ zueinander versetzt angeordnet sind, dass sie einander - längs der Dickenrichtung der Gasdiffusionslagen gesehen - nicht überlappen.

Gleiche oder funktional äquivalente Elemente sind in allen Figuren mit denselben Bezugszeichen bezeichnet.

Eine in den Fig. 1 und 2 dargestellte, als Ganzes mit 100 bezeichnete nicht erfindungsgemäße elektrochemisch aktive Einheit für eine (nicht als Ganzes dargestellte) elektrochemische Vorrichtung, beispielsweise für eine Brennstoffzellenvorrichtung oder einen Elektrolyseur, umfasst eine (beispielsweise katalysatorbeschichtete) Membran 102, eine (beispielsweise anodenseitig angeordnete) erste Gasdiffusionslage 104, eine (beispielsweise kathodenseitig angeordnete) zweite Gasdiffusionslage 106 und ein Dichtungssystem 108, welches ein unerwünschtes Austreten von fluiden Medien (insbesondere eines Brenngases, eines Oxidationsmittels und/oder eines Kühlmittels) aus den Mediumkanälen ("Manifolds") und den Strömungsfeldern ("Flow Fields") der elektrochemischen Vorrichtung verhindert.

Das Dichtungssystem 108 umfasst eine Strömungsfeld-Dichtungsanordnung 110, welche sich um die Strömungsfelder im elektrochemisch aktiven zentralen Bereich der elektrochemisch aktiven Einheit 100 herum erstreckt. Die Dichtlinie 112 dieser Strömungsfeld-Dichtungsanordnung 110 ist in der Draufsicht von Fig. 1 durch eine strichdoppelpunktierte Linie dargestellt.

Ferner umfasst das Dichtungssystem 108 mehrere Mediumkanal-Dichtungsanordnungen 114, welche sich um jeweils einen Mediumkanal 116 herum erstrecken. Die Dichtlinien 118 dieser Mediumkanal-Dichtungsanordnungen 114 sind in der Draufsicht von Fig. 1 durch strichpunktierte Linien dargestellt.

Die Mediumkanäle 116 dienen der Zufuhr jeweils eines fluiden Mediums (im Falle einer Brennstoffzellenvorrichtung beispielsweise ein Brenngas, ein Oxidationsmittel oder ein Kühlmittel) zu den in einer Stapelrichtung 120 der elektrochemischen Vorrichtung übereinander angeordneten elektrochemisch aktiven Einheiten 100 beziehungsweise der Abfuhr jeweils eines fluiden Mediums aus den in der Stapelrichtung 120 übereinander angeordneten elektrochemisch aktiven Einheiten 100 der elektrochemischen Vorrichtung.

Jede der Mediumkanal-Dichtungsanordnungen 114 umschließt jeweils eine im Dichtungssystem 108 ausgebildete Medium-Durchtrittsöffnung 122, welche einen Bestandteil eines solchen Mediumkanals 116 bildet.

In Fig. 1 sind beispielsweise eine Medium-Durchtrittsöffnung 124 eines Mediumkanals für abzuführendes Rest-Brenngas, eine Medium-Durchtrittsöffnung 126 eines Mediumkanals für zuzuführendes Kühlmittel, eine Medium-Durchtrittsöffnung 128 eines Mediumkanals für zuzuführendes Oxidationsmittel, eine Medium-Durchtrittsöffnung 130 eines Mediumkanals für zuzuführendes Brenngas, eine Medium-Durchtrittsöffnung 132 für abzuführendes Kühlmittel und eine Medium-Durchtrittsöffnung 134 für abzuführendes Rest-Oxidationsmittel dargestellt.

Dabei ist jeder Mediumkanal für ein der elektrochemischen Vorrichtung zuzuführendes fluides Medium durch ein dazwischenliegendes Strömungsfeld der elektrochemischen Vorrichtung mit einem jeweils zugeordneten Mediumkanal für ein aus der elektrochemischen Vorrichtung abzuführendes fluides Medium verbunden.

Wie am besten aus Fig. 2 zu ersehen ist, umfasst das Dichtungssystem 108 ein erstes Dichtelement 136, welches an der (beispielsweise anodenseitigen) ersten Gasdiffusionslage 104 festgelegt ist, und ein zweites Dichtelement 138, welches an der (beispielsweise kathodenseitigen) zweiten Gasdiffusionslage 106 festgelegt ist.

Die Dichtelemente 136 und 138 sind vorzugsweise mittels eines Spritzgießvorgangs an der jeweils zugeordneten Gasdiffusionslage 104 beziehungsweise 106 erzeugt.

Die Dichtelemente 136 und 138 umfassen vorzugsweise ein Elastomermaterial und können insbesondere im Wesentlichen vollständig aus einem Elastomermaterial gebildet sein.

Die Dichtelemente 136 und 138 liegen im montierten Zustand der elektrochemischen Vorrichtung vorzugsweise fluiddicht aneinander an, ohne aneinander festgelegt zu sein.

Mindestens eines der Dichtelemente 136 und 138 umfasst einen unmittelbar an der jeweils zugeordneten Gasdiffusionslage 104, 106 festgelegten inneren Dichtbereich und einen auf der der jeweils zugeordneten Gasdiffusionslage 104, 106 abgewandten Seite des inneren Dichtbereichs 140 angeordneten äußeren Dichtbereich 142, welcher über den inneren Dichtbereich 140 indirekt mit der jeweils zugeordneten Gasdiffusionslage 104 beziehungsweise 106 verbunden ist.

Der innere Dichtbereich 140 erstreckt sich am Rand der jeweils zugeordneten Gasdiffusionslage 104, 106 ringförmig geschlossen um die betreffende Gasdiffusionslage 104, 106 herum und bildet einen Bestandteil der Strömungsfeld-Dichtungsanordnung 110.

Der äußere Dichtbereich 142 erstreckt sich um eine oder mehrere Medium-Durchtrittsöffnungen 122 der elektrochemisch aktiven Einheit 100 herum und bildet einen Bestandteil von einer Mediumkanal-Dichtungsanordnung 114 oder von mehreren Mediumkanal-Dichtungsanordnungen 114.

Zwischen dem inneren Dichtbereich 140 und dem äußeren Dichtbereich 142 kann ein Zwischenbereich 143 des jeweiligen Dichtelements 136, 138 angeordnet sein.

Jeder innere Dichtbereich 140 eines der Dichtelemente 136, 138 dichtet anodenseitig oder kathodenseitig längs der Dichtlinie 112 der Strömungsfeld-Dichtungsanordnung 110 ab, indem der betreffende innere Dichtbereich 140 mit einer oder mehreren Dichtlippen 144, welche jeweils eine Kuppe 146 aufweisen, fluiddicht an einer (nicht dargestellten) Bipolarplatte der elektrochemischen Vorrichtung anliegt.

Dabei gibt die in Fig. 1 strichdoppelpunktiert angegebene Dichtlinie 112 der Strömungsfeld-Dichtungsanordnung 110 nicht den genauen Verlauf einer der Kuppen 146 der Dichtlippen 144 des inneren Dichtbereichs 140 an, sondern symbolisiert lediglich den Verlauf der Dichtlippen 144 des inneren Dichtbereichs 140, welcher eine oder mehrere solcher Dichtlippen 144 aufweisen kann.

Jeder innere Dichtbereich 140 umfasst ferner jeweils einen Durchdringungsbereich 148, der durch einen Abschnitt der dem jeweiligen inneren Dichtbereich 140 zugeordneten Gasdiffusionslage 104 beziehungsweise 106 gebildet ist, in welchen das Dichtungsmaterial des betreffenden Dichtelements 136 beziehungsweise 138 während des Spritzgießvorgangs eindringt, so dass im ausgehärteten Zustand des Dichtelements 136 beziehungsweise 138 das Dichtungsmaterial desselben einen Teil der porösen Gasdiffusionslage 104 beziehungsweise 106 durchdringt.

Jeder Durchdringungsbereich 148 schafft eine stoffschlüssige und/oder formschlüssige Verbindung zwischen der jeweiligen Gasdiffusionslage 104, 106 und dem jeweils zugeordneten Dichtelement 136 beziehungsweise 138, so dass die jeweilige Gasdiffusionslage 104, 106 und das jeweilige Dichtelement 136, 138 während der nachfolgenden Montageschritte und während des Betriebs der elektrochemischen Vorrichtung mechanisch ausreichend gut miteinander verbunden sind.

Der innere Dichtbereich 140 des jeweiligen Dichtelements 136, 138 steht über einen Außenrand 150 der jeweiligen Gasdiffusionslage 104, 106 nach außen über.

Der äußere Dichtbereich 142 jedes Dichtelements 136, 138 ist auf der dem jeweiligen Durchdringungsbereich 148 abgewandten Seite des inneren Dichtbereichs 140 angeordnet.

Jeder äußere Dichtbereich 142 dichtet längs einer oder mehrerer Dichtlinien 118 der Mediumkanal-Dichtungsanordnungen 114 anodenseitig und/oder kathodenseitig ab, indem der äußere Dichtbereich 142 mit einer oder mehreren Dichtlippen 152, welche jeweils eine Kuppe 154 aufweisen, jeweils an einer (nicht dargestellten) Bipolarplatte der elektrochemischen Vorrichtung fluiddicht anliegt.

Die in Fig. 1 in strichpunktierten Linien dargestellten Dichtlinien 118 der Mediumkanal-Dichtungsanordnungen 114 geben dabei nicht den genauen Verlauf einer der Kuppen 154 der Dichtlippen 152 der äußeren Dichtbereiche 142 an, sondern symbolisieren lediglich den Verlauf der Dichtlippen 152 des äußeren Dichtbereichs 142, welcher in jeder Mediumkanal-Dichtungsanordnung 114 anodenseitig und/oder kathodenseitig jeweils eine oder mehrere Dichtlippen 152 aufweisen kann.

Dabei können die Dichtlippen 152 der Mediumkanal-Dichtungsanordnungen 114 alle dem ersten Dichtelement 136 zugeordnet sein, alle dem zweiten Dichtelement 138 zugeordnet sein oder auf das erste Dichtelement 136 und das zweite Dichtelement 138 verteilt sein, beispielsweise derart, dass die anodenseitigen Dichtlippen 152 am ersten Dichtelement 136 angeordnet sind und die kathodenseitigen Dichtlippen 152 am zweiten Dichtelement 138 angeordnet sind.

Die Zuordnung der Dichtlippen 152 der Mediumkanal-Dichtungsanordnungen 114 zu den Dichtelementen 136 und 138 kann dabei für jede Mediumkanal-Dichtungsanordnung 114 unterschiedlich gewählt sein.

So kann beispielsweise vorgesehen sein, dass in einer ersten Mediumkanal-Dichtungsanordnung 114 alle Dichtlippen 152 an dem ersten Dichtelement 136 vorgesehen sind, während in einer zweiten Mediumkanal-Dichtungsanordnung 114 alle Dichtlippen 152 an dem zweiten Dichtelement 138 vorgesehen sind und in einer dritten Mediumkanal-Dichtungsanordnung 114 die Dichtlippen 152 auf die beiden Dichtelemente 136 und 138 verteilt sind.

Bei dem in Fig. 2 dargestellten Ausführungsbeispiel einer Baugruppe 156 weist der innere Dichtbereich 140 des ersten Dichtelements 136 die anodenseitigen Dichtlippen 144 der Strömungsfeld-Dichtungsanordnung 110 auf, während der äußere Dichtbereich 142 des ersten Dichtelements 136 sowohl die anodenseitigen als auch die kathodenseitigen Dichtlippen 152 der Mediumkanal-Dichtungsanordnung 114 aufweist, welche sich um die Medium-Durchtrittsöffnung 124 für abzuführendes Brenngas herum erstreckt (siehe Fig. 1).

Das zweite Dichtelement 138 weist bei dieser Ausführungsform lediglich einen inneren Dichtbereich 140 auf, welcher mit den kathodenseitigen Dichtlippen 152 der Strömungsfeld-Dichtungsanordnung 110 versehen ist.

Jeder der Dichtlinien 112 und 118 sind dabei sowohl anodenseitig als auch kathodenseitig jeweils zwei Dichtlippen 144 beziehungsweise 152 zugeordnet.

Die Erzeugung der Dichtelemente 136, 138 an der jeweiligen Gasdiffusionslage 104 beziehungsweise 106 erfolgt vorzugsweise in einem Spritzgießwerkzeug bei einer Temperatur, welche üblicherweise höher als 100°C und niedriger als 200°C ist.

Nach dem Spritzgießvorgang und einer Heizzeit zur Vernetzung des eingespritzten Dichtungsmaterials, insbesondere eines Elastomermaterials, wird das Spritzgießwerkzeug geöffnet und die Baugruppe 156 aus der Gasdiffusionslage 104, 106 und dem am äußeren Rand derselben angespritzten Dichtelement 136 beziehungsweise 138 aus dem Spritzgießwerkzeug entnommen.

Die Gasdiffusionslage 104, 106 und das Dichtungsmaterial der Dichtelemente 136, 138 haben üblicherweise voneinander verschiedene Wärmeausdehnungskoeffizienten. In der Regel weist die Gasdiffusionslage 104, 106 einen sehr geringen (oder sogar negativen) Wärmeausdehnungskoeffizienten auf, während das Dichtelement 136, 138 einen sehr großen (positiven) Wärmeausdehnungskoeffizienten aufweist. Durch diese Unterschiede in den Wärmeausdehnungskoeffizienten kann es zu einem starken Verzug der Baugruppe 156 und zu mechanischen Spannungen in der Baugruppe 156 kommen.

Ferner weisen Elastomermaterialien üblicherweise eine Schrumpfung durch die Vernetzung auf, welche ebenfalls zum Verzug der Baugruppe 156 beiträgt.

Der gesamte Verzug, der durch die Schrumpfung des Dichtelements 136, 138 aufgrund der Vernetzung und durch die Unterschiede in den Wärmeausdehnungskoeffizienten des Dichtelements 136, 138 einerseits und der Gasdiffusionslage 104, 106 andererseits insgesamt entsteht, wirkt sich auf die Form sowohl der jeweiligen Gasdiffusionslage 104, 106 als auch des jeweiligen Dichtelements 136, 138 aus.

Sowohl die Gasdiffusionslage 104, 106 als auch das Dichtelement 136, 138 weisen jeweils eine spezifische Steifigkeit und/oder ein Verformungsverhalten auf, welche das Entstehen des Verzuges stark beeinflussen.

Einen großen Einfluss auf das Verzugsverhalten hat die geometrische Gestaltung des Dichtelements 136, 138, wobei der Verzug des inneren Dichtbereichs 140, der sich unmittelbar in der Nähe des Anbindungsbereiches zwischen dem Dichtelement 136, 138 und der jeweiligen Gasdiffusionslage 104, 106 befindet, einen größeren Einfluss auf den Verzug der Gasdiffusionslage 104, 106 hat als der äußere Dichtbereich 142, der sich weit entfernt von dem Anbindungsbereich zwischen dem Dichtelement 136, 138 und der Gasdiffusionslage 104, 106 befindet, da im Falle des inneren Dichtbereichs 140 eine direkte Kraftübertragung zwischen dem Dichtelement 136, 138 und der Gasdiffusionslage 104, 106 stattfinden kann.

Der Querschnitt des Dichtelements 136, 138 im inneren Dichtbereich 140 hat einen großen Einfluss auf den Verzug der Baugruppe 156, insbesondere auf den Verzug der jeweiligen Gasdiffusionslage 104, 106, da durch einen größeren Querschnitt des Dichtelements 136, 138 bei gleicher Dehnung des Dichtungsmaterials eine größere Kraft in einer Richtung senkrecht zum Querschnitt des Dichtelements 136, 138 aufgebracht werden kann.

Ferner hat auch die Steifigkeit der Gasdiffusionslage 104, 106 einen sehr großen Einfluss auf den Verzug der Baugruppe 156. Eine hohe Steifigkeit der Gasdiffusionslage 104, 106 führt zu einem reduzierten Verzug der jeweiligen Gasdiffusionslage 104 beziehungsweise 106.

Der Verzug in der Baugruppe 156 und die hierdurch auftretenden mechanischen Spannungen in der Baugruppe 156 können bei der Assemblierung der Baugruppen 156 bei der Montage der elektrochemischen Vorrichtung zu stark erhöhtem Aufwand führen, weil sowohl die Handhabung der Bauteile als auch die Positionierung der verschiedenen Lagen der elektrochemischen Vorrichtung (Baugruppen 156 aus jeweils einer Gasdiffusionslage 104, 106 und einem Dichtelement 136, 138, Bipolarplatten und Membranen 102) zueinander erschwert sind. Auch die bei der Montage der elektrochemischen Vorrichtung erreichbaren Positionierungstoleranzen können durch die Verzüge signifikant ansteigen.

Um den Verzug der Baugruppe 156 aus Gasdiffusionslage 104, 106 und Dichtelement 136, 138 zu reduzieren, könnte die Temperatur des Spritzgießwerkzeugs abgesenkt werden, so dass die Differenz zwischen der Werkzeugtemperatur (und damit der Temperatur des Dichtungsmaterials beim Einbringen in das Spritzgießwerkzeug) und der Raumtemperatur geringer wird. Dadurch erhöht sich jedoch die Prozesszeit oder Zykluszeit des Spritzgießvorgangs, weil die Vernetzung bei der niedrigeren Temperatur langsamer erfolgt.

Wenn das verwendete Elastomermaterial auf eine geringere Vernetzungstemperatur angepasst wird, wird dessen Lagerfähigkeit über längere Zeit (die sogenannte Topfzeit) negativ beeinflusst.

Auch eine geometrische Vorhaltung (Bombierung) des Verzuges des Dichtelements 136, 138 in der Dickenrichtung 158 der Gasdiffusionslage 104, 106, welche in der fertig montierten elektrochemischen Vorrichtung der Stapelrichtung der elektrochemisch aktiven Einheiten 100 entspricht, innerhalb des inneren Dichtbereichs 140 ist unvorteilhaft, da dies zu erhöhtem Aufwand im Spritzgießwerkzeug führen kann, weil hierbei die Trennflächen des Spritzgießwerkzeugs von (einfacher herzustellenden) ebenen Flächen abweichen können und somit die Trennung verschiedener Werkzeugteile des Spritzgießwerkzeugs nicht mehr in einer Ebene erfolgen kann, was zu erhöhten Werkzeugkosten führt.

Ferner kann eine solche geometrische Vorhaltung des Verzuges des Dichtelements 136, 138 zu erhöhtem Platzbedarf führen.

Um ohne diese Nachteile den Verzug in der Baugruppe 156 zu reduzieren, umfasst die in Fig. 3 in einem ausschnittsweisen Querschnitt dargestellte erfindungsgemäße Baugruppe 156, welche die erste Gasdiffusionslage 104 und das erste Dichtelement 136 der vorstehend erläuterten elektrochemisch aktiven Einheit 100 umfasst, einen Entlastungsbereich 160, welcher in dem Zwischenbereich 143 zwischen dem inneren Dichtbereich 140 und dem äußeren Dichtbereich 142 des ersten Dichtelements 136 angeordnet ist und eine sich durch das erste Dichtelement 136 hindurch erstreckende Entlastungsöffnung 162 umfasst.

Diese Entlastungsöffnung 162 erstreckt sich längs der Umfangsrichtung 164 der Gasdiffusionslage 104 beispielsweise über eine Länge von höchstens ungefähr 50 mm, insbesondere von höchstens ungefähr 20 mm, und/oder über eine Länge von mindestens ungefähr 5 mm, insbesondere mindestens ungefähr 10 mm.

Die Breite d der Entlastungsöffnung 162, das heißt deren Erstreckung senkrecht zur Umfangsrichtung 164 der Gasdiffusionslage 104 und senkrecht zur Dickenrichtung 158 der Gasdiffusionslage 104, beträgt vorzugsweise höchstens ungefähr 5 mm, insbesondere höchstens ungefähr 3 mm, besonders bevorzugt höchstens ungefähr 2 mm, und/oder vorzugsweise mindestens ungefähr 50 µm, insbesondere mindestens ungefähr 100 µm, besonders bevorzugt mindestens ungefähr 200 µm.

Mehrere solcher Entlastungsbereiche 160 mit solchen Entlastungsöffnungen 162 können längs der Umfangsrichtung 164 der Gasdiffusionslage 104 aufeinander folgen und in der Umfangsrichtung 164 voneinander beabstandet sein.

Durch die Entlastungsbereiche 160 wird der Querschnitt des unmittelbar an die Gasdiffusionslage 104 angebundenen Bereichs des Dichtelements 136 reduziert, so dass die durch das Schrumpfen des Dichtelements aufgrund der unterschiedlichen Wärmeausdehnungskoeffizienten und aufgrund der Vernetzung des Elastomermaterials auf die Gasdiffusionslage 104 aufgebrachte Kraft, die zum Verzug der Baugruppe 156, insbesondere der Gasdiffusionslage 104, führen kann, reduziert wird.

Durch die Entlastungsbereiche 160 wird das Dichtelement 136 zwischen dem inneren Dichtbereich 140 und dem äußeren Dichtbereich 142 aufgeteilt, wobei der innere Dichtbereich 140 direkt an die Gasdiffusionslage 104 angebunden ist und der äußere Dichtbereich 142 durch die Entlastungsbereiche 160 von dem direkt an die Gasdiffusionslage 104 angebundenen inneren Dichtbereich 140 getrennt wird.

Wie aus der ausschnittsweisen Draufsicht von Fig. 4 zu ersehen ist, kann das Dichtelement 136 einer erfindungsgemäßen Baugruppe 156 insbesondere mindestens einen Entlastungsbereich 160 umfassen, der in einem Eckbereich 166 der Baugruppe 156 angeordnet ist, in welcher die Umfangsrichtung 164 der Gasdiffusionslage 104 ihre Richtung um einen Winkel α von mehr als 60°, beispielsweise um einen Winkel von ungefähr 90°, ändert.

Ein solcher Entlastungsbereich 160 kann insbesondere zwischen der Dichtlinie 112 der Strömungsfeld-Dichtungsanordnung 110 und der Dichtlinie 118 einer Mediumkanal-Dichtungsanordnung 114, welche sich beispielsweise um eine Medium-Durchtrittsöffnung 126 für zuzuführendes Kühlmittel oder um eine Medium-Durchtrittsöffnung 132 für abzuführendes Kühlmittel herum erstreckt, angeordnet sein.

Wie in Fig. 5 dargestellt, kann der äußere Dichtbereich 142 des Dichtelements 136 vorzugsweise unter Berücksichtigung eines Verzugsausgleichs gebildet sein.

Insbesondere kann vorgesehen sein, dass im Spritzgießwerkzeug eine geometrische Vorhaltung des Verzuges des äußeren Dichtbereichs 142 des Dichtelements 136 in einer senkrecht zur Dickenrichtung 158 ausgerichteten Ebene (entsprechend der Zeichenebene von Fig. 5) vorgesehen ist.

In Fig. 5 sind eine Innenkontur einer Medium-Durchtrittsöffnung 122 des ersten Dichtelements 136 und eine Außenkontur 170 des Entlastungsbereichs 160 in gebrochenen Linien so dargestellt, wie sie im Spritzgießwerkzeug ausgebildet sind.

Durch den Verzug des Dichtelements 136 aufgrund der Temperaturabnahme nach dem Spritzgießvorgang und aufgrund der Vernetzung des Elastomermaterials entspricht die Innenkontur der Medium-Durchtrittsöffnung 122 in der fertigen Baugruppe 156 mit ausgekühltem und vernetztem Dichtelement 136 der in Fig. 5 in durchgezogener Linie dargestellten Soll-Kontur 172 und die Außenkontur des Entlastungsbereiches 160 in der fertigen Baugruppe 156 der in Fig. 5 ebenfalls in durchgezogener Linie dargestellten Soll-Kontur 174.

Alternativ oder ergänzend zu einer solchen Vorhaltung oder Bombierung für einen lateralen Verzugsausgleich kann ein Verzugsausgleich auch in axialer Richtung, das heißt längs der Dickenrichtung 158 (entsprechend der Stapelrichtung der elektrochemischen Vorrichtung), durch eine geometrische Vorhaltung vorgesehen sein, wobei hierdurch allerdings ein erhöhter Fertigungsaufwand aufgrund einer nicht ebenen Trennung der Bestandteile des Spritzgießwerkzeugs entstehen kann.

Die Konturen des Dichtelements 136 im Spritzgießwerkzeug werden dabei so ausgebildet, dass die Länge und Position der Kontur im Spritzgießwerkzeug unter Berücksichtigung des zu erwartenden Schwundes durch die Vernetzung und des zu erwartenden Schwundes durch den Wärmeverzug der Länge und der Position der Soll-Kontur des Dichtelements 136 in der fertigen Baugruppe 156 entsprechen.

Wie aus den Fig. 4 und 5 zu ersehen ist, weist der Entlastungsbereich 160 vorzugsweise einen gerundeten Endbereich 176 und besonders bevorzugt zwei einander abgewandte gerundete Endbereiche 176 auf.

Diese Endbereiche 176 begrenzen den jeweiligen Entlastungsbereich 160 längs der Umfangsrichtung 164 der Gasdiffusionslage 104.

Durch den bogenförmig gekrümmten Verlauf des Randes des Entlastungsbereichs 160 in dem mindestens einen Endbereich 176 wird die Entstehung von Rissen im Dichtungsmaterial, insbesondere bei der Entformung des Dichtelements 136 aus dem Spritzgießwerkzeug und/oder bei der Handhabung der Baugruppe 156, vermieden.

Zur Vermeidung solcher Risse im Material des Dichtelements 136 ist es besonders günstig, wenn der Entlastungsbereich 160 in der Draufsicht auf das Dichtelement 136 längs der Dickenrichtung 158 der Gasdiffusionslage 104 im Wesentlichen hantelförmig ausgebildet ist (siehe Fig. 6), das heißt zwei Endbereiche 178 umfasst, welche jeweils eine gekrümmte Randlinie 180 aufweisen, deren Krümmungsradius R größer ist als die halbe Breite b eines zwischen den Endbereichen 178 liegenden Basisbereichs 182 des Entlastungsbereichs 160, welcher die beiden Endbereiche 178 miteinander verbindet.

Unter der Breite b des Basisbereichs 182 ist dabei dessen Ausdehnung senkrecht zur Dickenrichtung 158 der Gasdiffusionslage 104 und senkrecht zur Umfangsrichtung 164 der Gasdiffusionslage 104 zu verstehen.

Mindestens einer der Entlastungsbereiche 160 einer erfindungsgemäßen Baugruppe 156 kann statt durch eine das Dichtelement 136 in der Dickenrichtung 158 der Gasdiffusionslage 104 durchsetzende Entlastungsöffnung 162 auch dadurch gebildet sein, dass der betreffende Entlastungsbereich 160 eine kleinste Höhe hₑ aufweist, welche geringer ist als ein Viertel der größten Höhe H_{I} des inneren Dichtbereichs 140 und geringer ist als ein Viertel der größten Höhe H_{A} des äußeren Dichtbereichs 142 des Dichtelements 136, wie in Fig. 7 dargestellt.

Auch durch eine solche Verringerung der Höhe des Zwischenbereichs 143 zwischen dem inneren Dichtbereich 140 und dem äußeren Dichtbereich 142 des Dichtelements 136 wird erreicht, dass die durch die Schrumpfung des Dichtelements 136 beim Vernetzen und Abkühlen auf die Gasdiffusionslage 104 aufgebrachte Kraft, die zum Verzug der Baugruppe 156, insbesondere der Gasdiffusionslage 104, führen kann, reduziert wird.

Vorzugsweise beträgt die kleinste Höhe hₑ des Entlastungsbereichs 160 weniger als ein Sechstel, insbesondere weniger als ein Achtel, der größten Höhe H_{I} des inneren Dichtbereichs 140 und/oder weniger als ein Sechstel, insbesondere weniger als ein Achtel, der größten Höhe H_{A} des äußeren Dichtbereichs 142 des Dichtelements 136.

Der Entlastungsbereich 160 kann insbesondere als ein Film 184 ausgebildet sein, insbesondere als ein dünner Film.

Die Materialstärke hₑ des Entlastungsbereichs 160 beträgt vorzugsweise weniger als 100 µm, insbesondere weniger als 50 µm.

Fig. 8 zeigt einen ausschnittsweisen Querschnitt durch die Zwischenbereiche 143 eines ersten Dichtelements 136 und eines zweiten Dichtelements 138 bei einer weiteren Ausführungsform einer erfindungsgemäßen Baugruppe 156, bei welcher beide Dichtelemente 136 und 138 jeweils einen inneren Dichtbereich 140 und einen äußeren Dichtbereich 142 und jeweils mindestens einen in einem Zwischenbereich 143 zwischen dem inneren Dichtbereich 140 und dem äußeren Dichtbereich 142 angeordneten Entlastungsbereich 160 aufweisen.

Die Entlastungsbereiche 160 umfassen dabei jeweils eine Entlastungsöffnung 162, welche sich in der Dickenrichtung 158 der jeweiligen Gasdiffusionslage 104, 106 durch das jeweilige Dichtelement 136, 138 hindurch erstreckt.

Wie aus Fig. 8 zu ersehen ist, sind die Entlastungsbereiche 160 der beiden Dichtelemente 136 und 138 lateral, das heißt senkrecht zur Dickenrichtung 158 der Gasdiffusionslagen 104 und 106 und senkrecht zur Umfangsrichtung 164 der Gasdiffusionslagen 104 und 106, zueinander versetzt angeordnet, so dass die Entlastungsöffnungen 162 einander - in der Dickenrichtung 158 gesehen - nicht überlappen und somit keine durchgängige Öffnung zwischen den in der Stapelrichtung der elektrochemischen Vorrichtung über beziehungsweise unter der Baugruppe 156 liegenden Räumen 186 und 188 entsteht. Hierdurch werden Kurzschlüsse im Fluss der fluiden Medien durch die elektrochemische Vorrichtung und/oder ungewollte Einlagerungen von fluiden Medien vermieden.

## Patentansprüche

1. Baugruppe für eine elektrochemische Vorrichtung, umfassend mindestens eine Gasdiffusionslage (104, 106) und mindestens ein an der Gasdiffusionslage (104, 106) erzeugtes Dichtelement (136, 138), wobei das Dichtelement (136, 138) einen an der Gasdiffusionslage (104, 106) festgelegten inneren Dichtbereich (140) und einen über den inneren Dichtbereich (140) mit der Gasdiffusionslage (104, 106) verbundenen äußeren Dichtbereich (142) umfasst,
wobei der innere Dichtbereich (140) eine Strömungsfeld-Dichtlinie (112) aufweist, welche sich um die Gasdiffusionslage (104, 106) herum erstreckt, und
wobei der äußere Dichtbereich (142) mindestens eine Mediumkanal-Dichtlinie (118) aufweist, welche sich um eine Medium-Durchtrittsöffnung (122) des Dichtelements (136, 138) herum erstreckt,
**dadurch gekennzeichnet,**
**dass** das Dichtelement (136, 138) mindestens einen Entlastungsbereich (160) umfasst, welcher zwischen dem inneren Dichtbereich (140) und dem äußeren Dichtbereich (142) angeordnet ist,
wobei der mindestens eine Entlastungsbereich (160) zwischen der Strömungsfeld-Dichtlinie (112) und einer Mediumkanal-Dichtlinie (118) des Dichtelements (136, 138) angeordnet ist
und
a) eine sich durch das Dichtelement (136, 138) hindurch erstreckende Entlastungsöffnung (162) umfasst
und/oder
b) eine kleinste Höhe (hₑ) aufweist, welche geringer ist als ein Viertel der größten Höhe (H_{I}) des inneren Dichtbereichs (140) und geringer ist als ein Viertel der größten Höhe (H_{A}) des äußeren Dichtbereichs (142).

2. Baugruppe nach einem Anspruch 1, **dadurch gekennzeichnet, dass** das Dichtelement (136, 138) eine Mehrzahl von Entlastungsbereichen (160) umfasst, welche längs einer Umfangsrichtung (164) der Gasdiffusionslage (104, 106) aufeinander folgen.

3. Baugruppe nach einem der Ansprüche 1 oder 2, **dadurch gekennzeichnet, dass** das Dichtelement (136, 138) mindestens einen Entlastungsbereich (160) umfasst, welcher sich längs einer Umfangsrichtung (164) der Gasdiffusionslage (104, 106) erstreckt und in einem Eckbereich (166) der Baugruppe (156) angeordnet ist, in welchem die Umfangsrichtung (164) der Gasdiffusionslage (104, 106) ihre Richtung um einen Winkel (α) von mehr als 60° ändert.

4. Baugruppe nach einem der Ansprüche 1 bis 3, **dadurch gekennzeichnet, dass** das Dichtelement (136, 138) mindestens einen Entlastungsbereich (160) umfasst, welcher sich längs einer Umfangsrichtung (164) der Gasdiffusionslage (104, 106) über eine Länge von weniger als 50 mm erstreckt.

5. Baugruppe nach einem der Ansprüche 1 bis 4, **dadurch gekennzeichnet, dass** das Dichtelement (136, 138) mindestens einen Entlastungsbereich (160) umfasst, welcher mindestens einen gerundeten Endbereich (176, 178) aufweist.

6. Baugruppe nach einem der Ansprüche 1 bis 5, **dadurch gekennzeichnet, dass** das Dichtelement (136, 138) mindestens einen Entlastungsbereich (160) umfasst, welcher einen sich längs einer Umfangsrichtung (164) der Gasdiffusionslage (104, 106) erstreckenden Basisbereich (182) mit einer Breite (b) und mindestens einen Endbereich (178) mit einer gekrümmten Randlinie, deren Krümmungsradius (R) größer ist als die halbe Breite (b) des Basisbereichs (182), umfasst.

7. Baugruppe nach einem der Ansprüche 1 bis 6, **dadurch gekennzeichnet, dass** der äußere Dichtbereich (142) unter Berücksichtigung eines Verzugsausgleichs gebildet ist.

8. Baugruppe nach Anspruch 7, **dadurch gekennzeichnet, dass** ein Verzugsausgleichs längs einer Dickenrichtung (158) der Gasdiffusionslage (104, 106) vorgesehen ist.

9. Baugruppe nach einem der Ansprüche 7 oder 8, **dadurch gekennzeichnet, dass** ein Verzugsausgleich in einer senkrecht zu einer Dickenrichtung (158) der Gasdiffusionslage (104, 106) ausgerichteten Ebene vorgesehen ist.

10. Baugruppe nach einem der Ansprüche 1 bis 9, **dadurch gekennzeichnet, dass** mindestens ein Entlastungsbereich (160) als ein Film (184) mit einer Materialstärke von weniger als 100 µm ausgebildet ist.

11. Baugruppe nach einem der Ansprüche 1 bis 10, **dadurch gekennzeichnet, dass** die Baugruppe (156) eine erste Gasdiffusionslage (104) und eine zweite Gasdiffusionslage (106), ein an der ersten Gasdiffusionslage (104) erzeugtes erstes Dichtelement (136) und ein an der zweiten Gasdiffusionslage (106) erzeugtes zweites Dichtelement (138) umfasst,
wobei jedes der Dichtelemente (136, 138) einen an der jeweils zugeordneten Gasdiffusionslage (104, 106) festgelegten inneren Dichtbereich (140) und einen über den inneren Dichtbereich (140) mit der jeweils zugeordneten Gasdiffusionslage (104, 106) verbundenen äußeren Dichtbereich (142) umfasst und
wobei jedes der Dichtelemente (136, 138) mindestens einen Entlastungsbereich (160) umfasst, welcher zwischen dem jeweiligen inneren Dichtbereich (140) und dem jeweiligen äußeren Dichtbereich (142) angeordnet ist und
a) eine sich durch das jeweilige Dichtelement (136, 138) hindurch erstreckende Entlastungsöffnung (162) umfasst
und/oder
b) eine kleinste Höhe (hₑ) aufweist, welche geringer ist als ein Viertel der größten Höhe (Hi) des jeweiligen inneren Dichtbereichs (140) und geringer ist als ein Viertel der größten Höhe (H_{A}) des jeweiligen äußeren Dichtbereichs (142).

12. Baugruppe nach Anspruch 11, **dadurch gekennzeichnet, dass** mindestens ein Entlastungsbereich (160) des ersten Dichtelements (136) und mindestens ein Entlastungsbereich (160) des zweiten Dichtelements (138) so relativ zueinander versetzt angeordnet sind, dass sie einander - längs einer Dickenrichtung (158) der Gasdiffusionslagen (104, 106) gesehen - nicht überlappen.

13. Verfahren zum Herstellen einer Baugruppe (156) für eine elektrochemische Vorrichtung, welche mindestens eine Gasdiffusionslage (104, 106) und mindestens ein an der Gasdiffusionslage (104, 106) erzeugtes Dichtelement (136, 138) umfasst, wobei das Dichtelement (136, 138) einen an der Gasdiffusionslage (104, 106) festgelegten inneren Dichtbereich (140) und einen über den inneren Dichtbereich (140) mit der Gasdiffusionslage (104, 106) verbundenen äußeren Dichtbereich (142) umfasst,
wobei der innere Dichtbereich (140) eine Strömungsfeld-Dichtlinie (112) aufweist, welche sich um die Gasdiffusionslage (104, 106) herum erstreckt, und
wobei der äußere Dichtbereich (142) mindestens eine Mediumkanal-Dichtlinie (118) aufweist, welche sich um eine Medium-Durchtrittsöffnung (122) des Dichtelements (136, 138) herum erstreckt,
wobei das Verfahren Folgendes umfasst:
- Erzeugen mindestens eines Entlastungsbereichs (160) in dem Dichtelement (136, 138) zwischen dem inneren Dichtbereich (140) und dem äußeren Dichtbereich (142);
wobei der mindestens eine Entlastungsbereich (160) zwischen der Strömungsfeld-Dichtlinie (112) und einer Mediumkanal-Dichtlinie (118) des Dichtelements (136, 138) angeordnet ist und
wobei
a) der Entlastungsbereich (160) eine sich durch das Dichtelement (136, 138) hindurch erstreckende Entlastungsöffnung (162) umfasst
und/oder
b) der Entlastungsbereich (160) eine kleinste Höhe (hₑ) aufweist, welche geringer ist als ein Viertel der größten Höhe (H_{I}) des inneren Dichtbereichs (140) und geringer ist als ein Viertel der größten Höhe (H_{A}) des äußeren Dichtbereichs (142).

## Claims

1. Assembly for an electrochemical device, comprising at least one gas diffusion layer (104, 106) and at least one sealing element (136, 138) produced on the gas diffusion layer (104, 106),
wherein the sealing element (136, 138) comprises an inner sealing region (140) fixed to the gas diffusion layer (104, 106) and an outer sealing region (142) connected to the gas diffusion layer (104, 106) by way of the inner sealing region (140),
wherein the inner sealing region (140) has a flow field sealing line (112), which extends around the gas diffusion layer (104, 106), and
wherein the outer sealing region (142) has at least one medium channel sealing line (118), which extends around a medium through-opening (122) of the sealing element (136, 138),
**characterized in that**
the sealing element (136, 138) comprises at least one relief region (160), which is arranged between the inner sealing region (140) and the outer sealing region (142),
wherein the at least one relief region (160) is arranged between the flow field sealing line (112) and a medium channel sealing line (118) of the sealing element (136, 138),
and
a) comprises a relief opening (162) extending through the sealing element (136, 138)
and/or
b) has a smallest height (hₑ), which is smaller than one fourth of the greatest height (H_{I}) of the inner sealing region (140) and is smaller than one fourth of the greatest height (H_{A}) of the outer sealing region (142).

2. Assembly in accordance with Claim 1, **characterized in that** the sealing element (136, 138) comprises a plurality of relief regions (160), which succeed one another along a peripheral direction (164) of the gas diffusion layer (104, 106).

3. Assembly in accordance with either of Claims 1 or 2, **characterized in that** the sealing element (136, 138) comprises at least one relief region (160), which extends along a peripheral direction (164) of the gas diffusion layer (104, 106) and is arranged in a corner region (166) of the assembly (156) in which the peripheral direction (164) of the gas diffusion layer (104, 106) changes its direction by an angle (α) of more than 60°.

4. Assembly in accordance with any one of Claims 1 to 3, **characterized in that** the sealing element (136, 138) comprises at least one relief region (160), which extends along a peripheral direction (164) of the gas diffusion layer (104, 106) over a length of less than 50 mm.

5. Assembly in accordance with any one of Claims 1 to 4, **characterized in that** the sealing element (136, 138) comprises at least one relief region (160), which has at least one rounded end region (176, 178).

6. Assembly in accordance with any one of Claims 1 to 5, **characterized in that** the sealing element (136, 138) comprises at least one relief region (160), which comprises a base region (182) with a width (b), extending along a peripheral direction (164) of the gas diffusion layer (104, 106), and at least one end region (178) with a curved rim line, the radius of curvature (R) of which is greater than half of the width (b) of the base region (182).

7. Assembly in accordance with any one of Claims 1 to 6, **characterized in that** the outer sealing region (142) is formed taking a warpage compensation into account.

8. Assembly in accordance with Claim 7, **characterized in that** a warpage compensation is provided along a thickness direction (158) of the gas diffusion layer (104, 106).

9. Assembly in accordance with either of Claims 7 or 8, **characterized in that** a warpage compensation is provided in a plane oriented perpendicularly to a thickness direction (158) of the gas diffusion layer (104, 106).

10. Assembly in accordance with any one of Claims 1 to 9, **characterized in that** at least one relief region (160) is configured as a film (184) with a material thickness of less than 100 µm.

11. Assembly in accordance with any one of Claims 1 to 10, **characterized in that** the assembly (156) comprises a first gas diffusion layer (104) and a second gas diffusion layer (106), a first sealing element (136) produced on the first gas diffusion layer (104), and a second sealing element (138) produced on the second gas diffusion layer (106),
wherein each of the sealing elements (136, 138) comprises an inner sealing region (140) fixed to the respectively associated gas diffusion layer (104, 106) and an outer sealing region (142) connected to the respectively associated gas diffusion layer (104, 106) by way of the inner sealing region (140), and
wherein each of the sealing elements (136, 138) comprises at least one relief region (160), which is arranged between the respective inner sealing region (140) and the respective outer sealing region (142) and
a) comprises a relief opening (162) extending through the respective sealing element (136, 138)
and/or
b) has a smallest height (hₑ), which is smaller than one fourth of the greatest height (H_{I}) of the respective inner sealing region (140) and is smaller than one fourth of the greatest height (H_{A}) of the respective outer sealing region (142).

12. Assembly in accordance with Claim 11, **characterized in that** at least one relief region (160) of the first sealing element (136) and at least one relief region (160) of the second sealing element (138) are arranged offset relative to one another such that they do not overlap one another, seen along a thickness direction (158) of the gas diffusion layers (104, 106).

13. Method for producing an assembly (156) for an electrochemical device, which comprises at least one gas diffusion layer (104, 106) and at least one sealing element (136, 138) produced on the gas diffusion layer (104, 106), wherein the sealing element (136, 138) comprises an inner sealing region (140) fixed to the gas diffusion layer (104, 106) and an outer sealing region (142) connected to the gas diffusion layer (104, 106) by way of the inner sealing region (140),
wherein the inner sealing region (140) has a flow field sealing line (112), which extends around the gas diffusion layer (104, 106), and
wherein the outer sealing region (142) has at least one medium channel sealing line (118), which extends around a medium through-opening (122) of the sealing element (136, 138),
wherein the method comprises the following:
- producing at least one relief region (160) in the sealing element (136, 138) between the inner sealing region (140) and the outer sealing region (142);
wherein the at least one relief region (160) is arranged between the flow field sealing line (112) and a medium channel sealing line (118) of the sealing element (136, 138), and
wherein
a) the relief region (160) comprises a relief opening (162) extending through the sealing element (136, 138)
and/or
b) the relief region (160) has a smallest height (hₑ), which is smaller than one fourth of the greatest height (H_{I}) of the inner sealing region (140) and is smaller than one fourth of the greatest height (H_{A}) of the outer sealing region (142).

## Revendications

1. Module pour un dispositif électrochimique, comprenant au moins une couche de diffusion gazeuse (104, 106) et au moins un élément d'étanchéité (136, 138) produit au niveau de la couche de diffusion gazeuse (104, 106),
dans lequel l'élément d'étanchéité (136, 138) comprend une région d'étanchéité intérieure (140) prédéterminée au niveau de la couche de diffusion gazeuse (104, 106) et une région d'étanchéité extérieure (142) reliée à la couche de diffusion gazeuse (104, 106) via la région d'étanchéité intérieure (140),
dans lequel la région d'étanchéité intérieure (140) présente une ligne d'étanchéité de champ d'écoulement (112), laquelle s'étend autour de la couche de diffusion gazeuse (104, 106), et
dans lequel la région d'étanchéité extérieure (142) présente au moins une ligne d'étanchéité de canal d'écoulement de milieu (118), laquelle s'étend autour d'une ouverture de passage de milieu (122) de l'élément d'étanchéité (136, 138),
**caractérisé en ce que**
l'élément d'étanchéité (136, 138) comprend au moins une région de décharge (160), laquelle est agencée entre la région d'étanchéité intérieure (140) et la région d'étanchéité extérieure (142),
dans lequel la au moins une région de décharge (160) est agencée entre la ligne d'étanchéité de champ
d'écoulement (112) et une ligne d'étanchéité de canal d'écoulement de milieu (118)
et
a) comprend une ouverture de décharge (162) s'étendant à travers l'élément d'étanchéité (136, 138)
et/ou
b) présente une hauteur la plus petite (hₑ), laquelle est inférieure à un quart de la hauteur la plus grande (H_{I}) de la région d'étanchéité intérieure (140) et inférieure à un quart de la hauteur la plus grande (H_{A}) de la région d'étanchéité extérieure (142).

2. Module selon la revendication 1, **caractérisé en ce que** l'élément d'étanchéité (136, 138) comprend une pluralité de régions de décharge (160), lesquelles se succèdent dans une direction circonférentielle (164) de la couche de diffusion gazeuse (104, 106).

3. Module selon l'une des revendications 1 ou 2, **caractérisé en ce que** l'élément d'étanchéité (136, 138) comprend au moins une région de décharge (160), laquelle s'étend dans une direction circonférentielle (164) de la couche de diffusion gazeuse (104, 106) et est agencée dans une région d'angle (166) du module (156), dans laquelle la direction circonférentielle (164) de la couche de diffusion gazeuse (104, 106) modifie sa direction selon un angle (α) supérieur à 60°.

4. Module selon l'une des revendications 1 à 3, **caractérisé en ce que** l'élément d'étanchéité (136, 138) comprend au moins une région de décharge (160), laquelle s'étend dans une direction circonférentielle (164) de la couche de diffusion gazeuse (104, 106) sur une longueur inférieure à 50 mm.

5. Module selon l'une des revendications 1 à 4, **caractérisé en ce que** l'élément d'étanchéité (136, 138) comprend au moins une région de décharge (160), laquelle présente au moins une région d'extrémité (176, 178) arrondie.

6. Module selon l'une des revendications 1 à 5, **caractérisé en ce que** l'élément d'étanchéité (136, 138) comprend au moins une région de décharge (160), laquelle comprend une région de base (182), s'étendant dans une direction circonférentielle (164) de la couche de diffusion gazeuse (104, 106), avec une largeur (b) et au moins une région d'extrémité (178) avec une ligne de bord courbée dont le rayon de courbure (R) est supérieur à la demi-largeur (b) de la région de base (182).

7. Module selon l'une des revendications 1 à 6, **caractérisé en ce que** la région d'étanchéité extérieure (142) est formée en tenant compte d'une compensation de déformation.

8. Module selon la revendication 7, **caractérisé en ce qu'**une compensation de déformation est prévue dans une direction d'épaisseur (158) de la couche de diffusion gazeuse (104, 106).

9. Module selon l'une des revendications 7 ou 8, **caractérisé en ce qu'**une compensation de déformation est prévue dans un plan orienté perpendiculairement à une direction d'épaisseur (158) de la couche de diffusion gazeuse (104, 106).

10. Module selon l'une des revendications 1 à 9, **caractérisé en ce qu'**au moins une région de décharge (160) est conçue en tant que film (184) avec une épaisseur de matériau inférieure à 100 pm.

11. Module selon l'une des revendications 1 à 10, **caractérisé en ce que** le module (156) comprend une première couche de diffusion gazeuse (104) et une seconde couche de diffusion gazeuse (106), un premier élément d'étanchéité (136) produit au niveau de la première couche de diffusion gazeuse (104) et un second élément d'étanchéité (138) produit au niveau de la seconde couche de diffusion gazeuse (106),
dans lequel chacun des éléments d'étanchéité (136, 138) comprend une région d'étanchéité intérieure (140) prédéterminée au niveau de la couche de diffusion gazeuse (104, 106) respectivement attribuée et une région d'étanchéité extérieure (142) reliée à la couche de diffusion gazeuse (104, 106) respectivement attribuée via la région d'étanchéité intérieure (140) et
dans lequel chacun des éléments d'étanchéité (136, 138) comprend au moins une région de décharge (160), laquelle est agencée entre la région d'étanchéité intérieure (140) respective et la région d'étanchéité extérieure (142) respective et
a) comprend une ouverture de décharge (162) s'étendant à travers l'élément d'étanchéité (136, 138) respectif
et/ou
b) présente une hauteur la plus petite (hₑ), laquelle est inférieure à un quart de la hauteur la plus grande (H_{I}) de la région d'étanchéité intérieure (140) respective et inférieure à un quart de la hauteur la plus grande (H_{A}) de la région d'étanchéité extérieure (142) respective.

12. Module selon la revendication 11, **caractérisé en ce qu'**au moins une région de décharge (160) du premier élément d'étanchéité (136) et au moins une région de décharge (160) du second élément d'étanchéité (138) sont agencées de façon décalée l'une par rapport à l'autre de sorte qu'elles ne se chevauchent pas l'une l'autre - vu dans une direction d'épaisseur (158) des couches de diffusion gazeuse (104, 106).

13. Procédé de fabrication d'un module (156) pour un dispositif électrochimique, lequel comprend au moins une couche de diffusion gazeuse (104, 106) et au moins un élément d'étanchéité (136, 138) produit au niveau de la couche de diffusion gazeuse (104, 106), dans lequel l'élément d'étanchéité (136, 138) comprend une région d'étanchéité intérieure (140) prédéterminée au niveau de la couche de diffusion gazeuse (104, 106) et une région d'étanchéité extérieure (142) reliée à la couche de diffusion gazeuse (104, 106) via la région d'étanchéité intérieure (140),
dans lequel la région d'étanchéité intérieure (140) présente une ligne d'étanchéité de champ d'écoulement (112), laquelle s'étend autour de la couche de diffusion gazeuse (104, 106), et
dans lequel la région d'étanchéité extérieure (142) présente au moins une ligne d'étanchéité de canal d'écoulement de milieu (118), laquelle s'étend autour d'une ouverture de passage de milieu (122) de l'élément d'étanchéité (136, 138),
dans lequel le procédé comprend ce qui suit :
- la production d'au moins une région de décharge (160) dans l'élément d'étanchéité (136, 138) entre la région d'étanchéité intérieure (140) et la région d'étanchéité extérieure (142) ;
dans lequel la au moins une région de décharge (160) est agencée entre la ligne d'étanchéité de champ d'écoulement (112) et une ligne d'étanchéité de canal d'écoulement de milieu (118) de l'élément d'étanchéité (136, 138) et
dans lequel
a) la région de décharge (160) comprend une ouverture de décharge (162) s'étendant à travers l'élément d'étanchéité (136, 138)
et/ou
b) la région de décharge (160) présente une hauteur la plus petite (hₑ), laquelle est inférieure à un quart de la hauteur la plus grande (H_{I}) de la région d'étanchéité intérieure (140) et inférieure à un quart de la hauteur la plus grande (H_{A}) de la région d'étanchéité extérieure (142).
